# EUROPÄISCHE PATENTSCHRIFT

(11) **EP 1 050 066 B1**
(45) Veröffentlichungstag und Bekanntmachung des Hinweises auf die Patenterteilung: **15.10.2003**
(21) Anmeldenummer: 99969208.0
(22) Anmeldetag: 28.08.1999
(51) Int. Cl.: H01J 61/04

(54) **ENTLADUNGSLAMPE MIT DIELEKTRISCH BEHINDERTEN ELEKTRODEN**
DISCHARGE LAMP WITH DIELECTRICALLY INHIBITED ELECTRODES
LAMPE A DECHARGE COMPORTANT DES ELECTRODES SEPAREES PAR UNE BARRIERE DIELECTRIQUE

(30) Priorität: 22.09.1998 DE 19843419
(43) Veröffentlichungstag der Anmeldung: 08.11.2000
(73) Patentinhaber: Patent-Treuhand-Gesellschaft für elektrische Glühlampen mbH, 81543 München (DE)
(72) Erfinder: SEIBOLD, Michael, 81249 München (DE); ILMER, Michael, 86150 Augsburg (DE); EBERHARDT, Angela, 86157 Augsburg (DE)
(86) Internationale Anmeldenummer: DE9902703
(87) Internationale Veröffentlichungsnummer: WO00017910

(56) Entgegenhaltungen:
- EP-A- 0 348 979
- WO-A-98/43276
- PATENT ABSTRACTS OF JAPAN vol. 1997, no. 03, 31. März 1997 (1997-03-31) & JP 08 287871 A (STANLEY ELECTRIC CO LTD), 1. November 1996 (1996-11-01)
- PATENT ABSTRACTS OF JAPAN vol. 010, no. 370 (E-463), 10. Dezember 1986 (1986-12-10) & JP 61 165946 A (MITSUBISHI ELECTRIC CORP), 26. Juli 1986 (1986-07-26)
- PATENT ABSTRACTS OF JAPAN vol. 010, no. 370 (E-463), 10. Dezember 1986 (1986-12-10) & JP 61 165945 A (MITSUBISHI ELECTRIC CORP), 26. Juli 1986 (1986-07-26)
- PATENT ABSTRACTS OF JAPAN vol. 1998, no. 13, 30. November 1998 (1998-11-30) & JP 10 228884 A (TOSHIBA LIGHTING &TECHNOL CORP), 25. August 1998 (1998-08-25)

## Beschreibung

### Technisches Gebiet

Die Erfindung betrifft eine Entladungslampe gemäß dem Oberbegriff des Anspruchs 1.

Der Begriff "Entladungslampe" umfaßt dabei Quellen elektromagnetischer Strahlung auf der Basis von Gasentladungen. Das Spektrum der Strahlung kann dabei sowohl den sichtbaren Bereich als auch den UV(Ultraviolett)/VUV(Vakuumultraviolett)-Bereich sowie den IR(Infrarot)-Bereich umfassen. Ferner kann auch eine Leuchtstoffschicht zur Konvertierung unsichtbarer in sichtbare Strahlung vorgesehen sein.

Es handelt sich dabei um Entladungslampen mit sogenannten dielektrisch behinderten Elektroden. Die Elektroden als solche sind typischerweise in Form dünner metallischer Streifen bzw. leiterbahnähnlicher Schichtstrukturen, beispielsweise aus Leitsilber, realisiert, von denen zumindest ein Teil auf der Innenwandung des Entladungsgefäßes angeordnet ist, z.B. mittels drucktechnischer Verfahren wie Siebdruck o.ä.. Zumindest ein Teil dieser Innenwandungselektroden ist gegenüber dem Innern des Entladungsgefäßes mit einer dielektrischen Schicht vollständig abgedeckt, welche im Lampenbetrieb als dielektrische Behinderung bezüglich der Entladung fungiert.

Sind nur die Elektroden einer einzigen Polarität - vorzugsweise die An- oden - mit einer derartigen dielektrischen Behinderungsschicht abgedeckt, bildet sich im bevorzugten unipolaren Impulsbetrieb (WO94/23442) eine sogenannte einseitig dielektrisch behinderte Entladung aus, die aus einer Vielzahl deltaförmiger Teilentladungen besteht. Sind hingegen alle Elektroden, d.h. beiderlei Polarität, mit einer dielektrischen Behinderungsschicht abgedeckt, bildet sich sowohl im unipolaren als auch im bipolaren Betrieb eine sogenannte zweiseitig dielektrisch behinderte Entladung aus. Im bipolaren Betrieb, beispielsweise mit Wechselspannung oder auch bipolaren Impulsen (WO94/23442), übernimmt jede Elektrode abwechselnd sowohl die Rolle der Anode als auch die der Kathode.

Allerdings hat es sich bei derartigen Lampen gezeigt, daß Metallionen aus den Elektroden in die dielektrische Behinderungsschicht diffundieren und deren Eigenschaften in bezug auf ihre Funktion als dielektrische Behinderung für die Entladung unerwünscht beeinflussen können.

Bei einseitig dielektrischer Behinderung tritt zudem noch die Problematik hinzu, daß Metallteilchen der unbehinderten Innenwandungselektroden während der Fertigung der Lampe, z.B. während des Einbrennprozesses der dielektrischen Schicht, thermischer Fügeprozesse und ähnlichem, abdampfen und sich möglicherweise unkontrolliert innerhalb der Lampe niederschlagen können. Außerdem verringert sich unter Umständen die Leitfähigkeit der Elektrodenbahnen. Die genannte Problematik ist um so ausgeprägter, je höher die Temperatur (insbesondere höher als 400°C) und je länger die Zeit während der diese Temperatur herrscht. Während des Lampenbetriebs können zudem Metallteilchen aus den unbehinderten Elektroden durch Sputterprozesse herausgelöst werden und sich ebenfalls an der Entladungsgefäßwand niederschlagen. Der metallische Niederschlag auf der Entladungsgefäßwand führt zu einem Rückgang des Lichtstroms der Lampe. Außerdem beeinflussen die Dicke und Breite der typischerweise streifenförmigen Elektroden deren Stromtragfähigkeit, was insbesondere bei hohen Impulsströmen kritisch werden kann. Die Elektrodenbreite wirkt sich zudem auf die die dielektrisch behinderte Entladung direkt beeinflussende Kapazität der Elektrodenanordnung aus. Außerdem kann sich partiell die Schlagweite verringern, was die Gleichförmigkeit der Entladung negativ beeinflußt. Dies gilt in besonderem Maße für den in den Ausführungsbeispielen näher erläuterten Fall, daß die Kathodenbahnen mit Vorsprüngen versehen sind, an den die deltaförmigen Teilentladungen ansetzen.

Auf der dielektrischen Behinderungsschicht und im allgemeinen auch auf weiteren Teilen der Innenwand des Entladungsgefäßes kann eine weitere funktionelle Schicht aufgebracht sein, z.B. eine Schicht aus einem Leuchtstoff oder Leuchtstoffgemisch und/oder eine oder auch mehrere Reflexionsschichten für sichtbare Strahlung (Licht) und/oder UV-Strahlung. Die Reflexionsschicht dient gegebenenfalls dem Zweck, sichtbares Licht gezielt nach außen zu bringen, d.h. nur in einer bestimmten Vorzugsrichtung der Lampe. Allerdings schützen poröse Schichten, wie beispielsweise eine Leuchtstoffschicht, nur vermindert gegen Abdampfen oder Absputtern von Metallionen aus den Elektrodenbahnen. Außerdem sind die Elektrodenbahnen jedenfalls bis zum Aufbringen dieser Schichten während der Einbrennprozesse völlig ungeschützt.

Die geometrische Form des Entladungsgefäßes unterliegt keinen besonderen Einschränkungen. Gebräuchlich sind beispielsweise rohrförmige oder auch flache Entladungsgefäße. Letztere sind unter anderem als sogenannte Flachlampen zur Hinterleuchtung von Flüssigkristallbildschirmen (LCD) geeignet. Im Hinblick auf die technischen Details derartiger Lampen wird beispielsweise auf die DE 19718 395 C1 bzw. die WO 98/43277 verwiesen.

### Darstellung der Erfindung

Es ist Aufgabe der vorliegenden Erfindung, die genannten Nachteile zu vermeiden und eine Entladungslampe gemäß dem Oberbegriff des Anspruchs 1 bereitzustellen, die einen hinsichtlich des Langzeitverhaltens verbesserten Aufbau aufweist, insbesondere auch im Hinblick auf eine Ausdünnung der Elektroden durch Diffusion und Verringerung des Einflusses der Metallelektroden auf die dielektrische Schicht.

Diese Aufgabe wird bei einer Entladungslampe mit den Merkmalen des Oberbegriffs des Anspruchs 1 durch die Merkmale des kennzeichnenden Teils des Anspruchs 1 gelöst. Besonders vorteilhafte Ausgestaltungen finden sich in den abhängigen Ansprüchen.

Erfindungsgemäß ist im Falle der einseitigen dielektrischen Behinderung zumindest derjenige Teil der Innenwandungselektroden, der mit einer dielektrischen Behinderungsschicht bedeckt ist, zusätzlich direkt mit einer Sperrschicht bedeckt, d.h. daß die zusätzliche Sperrschicht jeweils zwischen Innenwandungselektroden und dielektrischer Behinderungsschicht angeordnet ist. Mit anderen Worten ist in diesem Falle die Anordnung der Schichten von der Innenwandung des Entladungsgefäßes aus betrachtet wie folgt: Elektrodenschicht, Sperrschicht, dielektrische Behinderungsschicht. Um das eingangs erwähnte Abdampfen und Absputtern von Metallteilchen von den Elektroden zu vermeiden ist es vorteilhaft, auch die dielektrisch unbehinderten Innenwandungselektroden mit einer derartigen Sperrschicht zu bedekken.

Im Falle der beidseitigen dielektrischen Behinderung sind erfindungsgemäß alle Innenwandungselektroden, d.h. die Elektroden beiderlei Polarität, unmittelbar mit der Sperrschicht bedeckt. Auf die Sperrschicht folgt schließlich die übliche dielektrische Behinderungsschicht.

Die Sperrschicht sollte mindestens jeweils die gesamte Elektrode abdecken, kann aber ggf. auch "ganzflächig" aufgebracht werden, d.h. daß im letzteren Fall sämtliche Elektroden einschließlich der Entladungsgefäßwandung, auf der die Elektroden angeordnet sind, mit einer einzigen zusammenhängenden Sperrschicht bedeckt sind. Die Aufbringung der typischerweise zunächst pastösen Sperrschicht erfolgt durch Standardverfahren wie Sprühen, Dispensen, Walzen, Sieb- oder Schablonendruck usw..

Die Sperrschicht besteht aus einem Dielektrikum, beispielsweise einem Glaslot, welches neben dem Abdampfen und Absputtern auch verhindert, daß die Metallionen der Elektroden durch die Sperrschicht hindurch in die für die dielektrisch behinderte Entladung wichtige dielektrische Behinderungsschicht diffundieren. Als in dieser Hinsicht geeignet haben sich zumindest teilkristallisierende oder kristallisierende Glaslote, sogenannte Sinterglaskeramiken, insbesondere Wismutborsilikatglas (Bi-B-Si-O), erwiesen. Weitere geeignete kristallisierende Glaslote sind beispielsweise Zinkwismutborsilikatglas (Zn-Bi-B-Si-O), Zinn-Zink-Phosphatglas (Sn-Zn-P-O) und Zinkborsilikatglas (Zn-B-Si-O). Der Kürze wegen und zur besseren begrifflichen Abgrenzung gegenüber der für die dielektrische Behinderung der Elektroden vorgesehenen dielektrischen Behinderungsschicht wird die als Diffusions-, Abdampf- und Absputtersperrschicht wirkende dielektrische Schicht auch im folgenden einfach als (dielektrische) Sperrschicht bezeichnet.

Für die erfindungsgemäße Wirkung hat es sich als ausreichend erwiesen, wenn die Dicke dieser Sperrschicht in der Größenordnung von mindestens ca. 1 µm beträgt. Typischerweise liegt die Dicke der Sperrschicht im Bereich zwischen 1 µm und 40 µm, bevorzugt im Bereich zwischen 1 µm und 30 µm, besonders bevorzugt im Bereich zwischen 5 µm und 20 µm liegt. In der Praxis haben sich Dicken von typisch einigen µm, z.B. 6 µm, bewährt. Jedenfalls ist die Dicke der Sperrschicht kleiner als die Dicke der Behinderungsschicht.

Außerdem ist es wesentlich, daß die Sperrschicht tatsächlich teilkristallisiert vorliegt.

Die dielektrische Behinderungsschicht kann sowohl streifenförmig auf die einzelnen Elektroden aufgebracht sein (für einseitige und zweiseitige dielektrische Behinderung) als auch - im Falle der zweiseitig dielektrisch behinderten Entladung - "ganzflächig" mittels einer einzigen zusammenhängenden Sperrschicht, die sämtliche Innenwandungselektroden einschließlich angrenzender Teile der Entladungsgefäßwandung überdeckt.

Die Wahl der geeigneten Dicke der dielektrischen Behinderungsschicht wird im wesentlichen von entladungsphysikalischen Anforderungen bestimmt und liegt in der Größenordnung von 50 µm und mehreren hundert µm, insbesondere im Bereich zwischen 50 und 200 µm. Das Material der dielektrischen Schicht wird ebenfalls im wesentlichen von entladungsphysikalischen Anforderungen bestimmt, insbesondere von den gewünschten dielektrischen Eigenschaften, z.B. Dielektrizitätszahl, elektrische Durchschlagsfestigkeit etc.. Geeignet ist beispielsweise Bleiborsilikatglas (Pb-B-Si-O).

### Beschreibung der Zeichnungen

Im folgenden soll die Erfindung anhand mehrerer Ausführungsbeispiele näher erläutert werden. Es zeigen:
- Figur 1a: eine schematische Darstellung einer teilweise durchbrochenen Draufsicht einer erfindungsgemäßen, flachen Entladungslampe mit auf der Grundplatte angeordneten Elektroden,
- Figur 1b: eine schematische Darstellung einer Seitenansicht der Flachlampe aus Figur 1a,
- Figur 1c: eine Teilschnittdarstellung der Flachlampe aus Figur 1a längs der Linie AA,
- Figur 2: eine Teilschnittdarstellung einer Variante der Flachlampe aus Figur 1a längs der Linie AA,

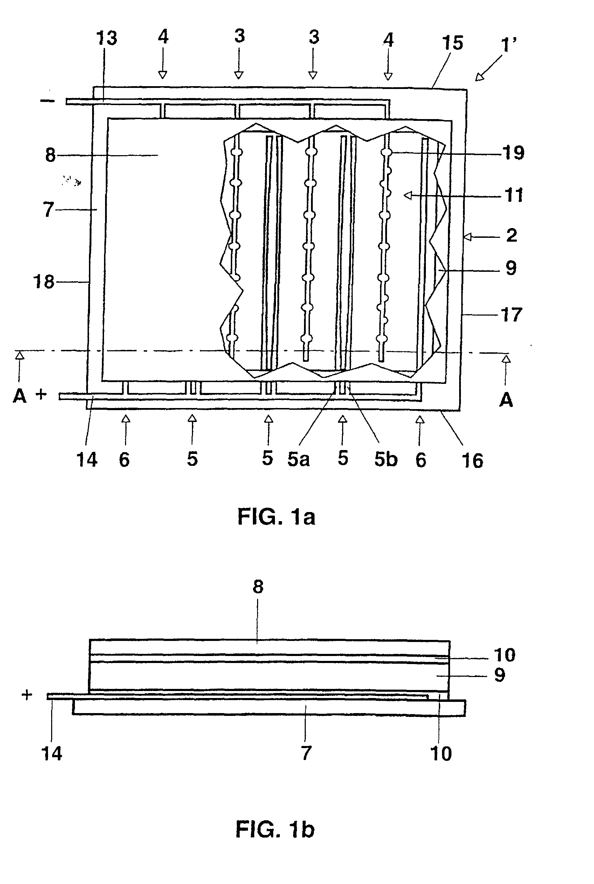

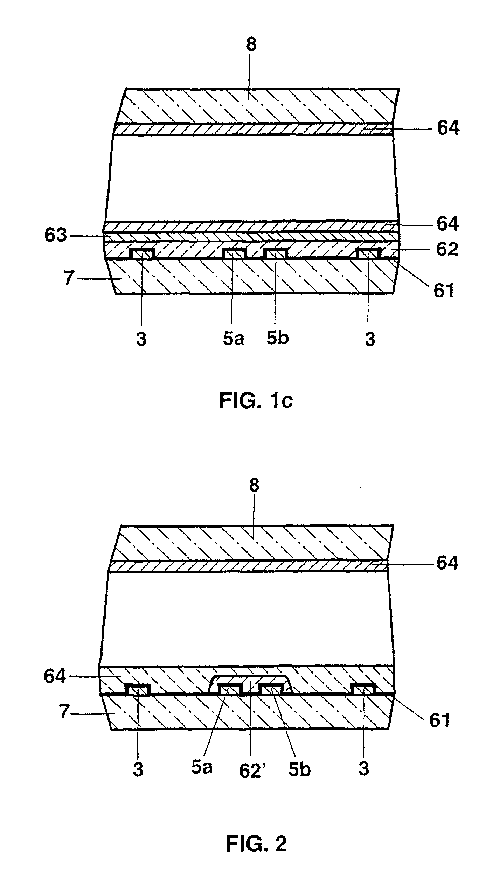

Die Figuren 1a, 1b und 1c zeigen in schematischer Darstellung eine Draufsicht, eine Seitenansicht bzw. einen Teilschnitt längs der Linie AA einer flachen Leuchtstofflampe, die im Betrieb weißes Licht emittiert. Sie ist als Hintergrundbeleuchtung für ein LCD (Liquid Crystal Display = Flüssigkristallbildschirm) konzipiert.

Die Flachlampe 1 besteht aus einem flachen Entladungsgefäß 2 mit rechtekkiger Grundfläche, vier streifenartigen metallischen Kathoden 3,4 (-) sowie Anoden (+), wovon drei als längliche Doppelanoden 5 und zwei als einzelne streifenartige Anoden 6 ausgebildet sind. Das Entladungsgefäß 2 besteht seinerseits aus einer Grundplatte 7, einer Frontplatte 8 und einem Rahmen 9. Grundplatte 7 und Frontplatte 8 sind jeweils mittels Glaslot 10 mit dem Rahmen 9 gasdicht verbunden derart, daß das Innere 11 des Entladungsgefäßes 2 quaderförmig ausgebildet ist. Die Grundplatte 7 ist größer als die Frontplatte 8 derart, daß das Entladungsgefäß 2 einen umlaufenden freistehenden Rand aufweist. Der Durchbruch in der Frontplatte 8 dient lediglich darstellerischen Zwecken und gibt den Blick auf einen Teil der Kathoden 3,4 und Anoden 5,6 frei.

Die Kathoden 3,4 und Anoden 5,6 sind abwechselnd und parallel auf der Innenwandung der Grundplatte 7 angeordnet. Die Anoden 6,5 und Kathoden 3,4 sind jeweils an ihrem einen Ende verlängert und auf der Grundplatte 7 aus dem Innern 11 des Entladungsgefäßes 2 beidseitig nach außen geführt. Auf dem Rand der Grundplatte 7 gehen die Elektrodenstreifen 3,4,5,6 in je eine kathodenseitige 13 bzw. anodenseitige 14, busartige äußere Stromzuführung über. Die beiden äußeren Stromzuführungen 13,14 dienen als Kontakte für die Verbindung mit einer elektrischen Versorgungsquelle (nicht dargestellt).

Im Innern 11 des Entladungsgefäßes 2 sind die Elektroden 3-6 sowie die angrenzende Entladungsgefäßwandung vollständig mit einer als Sperrschicht wirkenden Sinterglaskeramikschicht 61 aus Bi-B-Si-O bedeckt (vgl. Figur 1c), deren Dicke ca. 6 µm beträgt. Die Sperrschicht 61 ist ihrerseits vollständig mit einer dielektrischen Behinderungsschicht 62 aus Pb-B-Si-O bedeckt, deren Dicke über den Elektroden ca. 250 µm beträgt. Es handelt sich hier also um eine beidseitige dielektrische Behinderung. Die Sperrschicht 61 verhindert, daß Metallionen aus den Elektroden 3-6 in die dielektrische Behinderungsschicht 62 diffundieren. Auf der dielektrischen Behinderungsschicht 62 ist eine Reflektorschicht 63 aus TiO₂ aufgebracht, deren Dicke ca. 4 µm beträgt. Auf der Reflektorschicht 63 selbst sowie auf der Innenwandung der Frontplatte 8 ist eine Leuchtstoffgemischschicht 64 aufgebracht (die Schichten sind in Figur 1a der besseren Übersicht wegen nicht dargestellt; vgl. aber Figur 1c), welche die von der Entladung erzeugte UV/VUV-Strahlung in sichtbares weißes Licht konvertiert. Es handelt sich dabei um einen Dreibandenleuchtstoff mit der Blaukomponente BAM (BaMgAl₁₀O₁₇: Eu²⁺), der Grünkomponente LAP (LaPO₄: [Tb³⁺, Ce³⁺]) und der Rotkomponente YOB ([Y, Gd]BO₃: Eu³⁺). Die Dicke der Leuchtstoffgemischschicht 63 beträgt ca. 30 µm.

In einer Variante (nicht dargestellt) ist zwischen der TiO₂-Schicht und der Leuchtstoffschicht eine weitere Reflexionsschicht aus Al₂O₃ angeordnet. Auf diese Weise wird die Reflexionswirkung verbessert. Die Dicke der Al₂O₃-Schicht beträgt ca. 5 µm.

Die Elektroden 3-6 inklusive Durchführungen und äußere Stromzuführungen 13,14 sind als jeweils zusammenhängende kathoden- bzw. anodenseitige, leiterbahnähnliche schichtartige Struktur ausgebildet. Diese beiden schichtartigen Strukturen sowie die darauffolgenden weiteren funktionellen Schichten - Sperrschicht 61, dielektrische Behinderungsschicht 62, Reflexionsschicht 63 sowie Leuchtstoffschicht 64 sind mittels Siebdrucktechnik in der angegebenen Reihenfolge direkt auf der Grundplatte 7 bzw. soweit zutreffend auf der Frontplatte 8 aufgebracht.

Nach dem Aufbringen der Schichten 61-64 wird die Grundplatte 7 mit dem Rahmen 9 und dieser wiederum mit der Frontplatte 8 jeweils mittels Glaslot 10 zur kompletten Flachlampe 1 verschmolzen. Der thermische Fügevorgang erfolgt beispielsweise in einem Vakuumofen. Vor dem Verschmelzen der Komponenten des Entladungsgefäßes wird das Innere 11 der Flachlampe 1 mit Xenon mit einem Fülldruck von 10 kPa gefüllt.

Die beiden Anodenstreifen 5a,5b jedes Anodenpaares 5 sind in Richtung zu den beiden Rändern 15,16 der Flachlampe 1, die senkrecht zu den Elektrodenstreifen 3-6 orientiert sind verbreitert und zwar asymmetrisch ausschließlich in Richtung auf den jeweiligen Partnerstreifen 5b bzw. 5a zu. Der gegenseitige größte Abstand der beiden Streifen jedes Anodenpaares 5 beträgt ca. 4 mm, der kleinste Abstand beträgt ca. 3 mm. Die beiden einzelnen Anodenstreifen 6 sind jeweils in unmittelbarer Nähe der beiden zu den Elektrodenstreifen 3-6 parallelen Rändern 17,18 der Flachlampe 1 angeordnet.

Die Kathodenstreifen 3;4 weisen nasenartige, der jeweils benachbarten Anode 5;6 zugewandte halbkreisförmige Vorsprünge 19 auf. Sie bewirken lokal begrenzte Verstärkungen des elektrischen Feldes und folglich, daß die im unipolaren Impulsbetrieb gemäß WO 94/23442 entstehenden deltaförmigen Einzelentladungen (in Figur 1a nicht dargestellt) ausschließlich an diesen Stellen zünden. Der Abstand zwischen den Vorsprüngen 19 und dem jeweiligen unmittelbar benachbarten Anodenstreifen beträgt ca. 6 mm. Der Radius der halbkreisförmigen Vorsprünge 19 beträgt ca. 2 mm. Da die konkrete Ausgestaltung der Elektroden hier nur von untergeordneter Bedeutung ist, wird in diesem Zusammenhang auf die DE 196 36 965 A1 bzw. DE 197 11 892 A1 verwiesen.

Figur 2 zeigt eine Teilschnittdarstellung einer Variante der Flachlampe aus Figur 1a längs der Linie AA. Gleiche Merkmale sind mit den gleichen Bezugszeichen versehen. Im Unterschied zur Darstellung in Figur 1c handelt es sich hier um eine einseitige dielektrische Behinderung, d.h. daß nur jeweils die Anoden (5a, 5b) mit einer 250 µm dicken dielektrischen Behinderungsschicht 62' aus Bleiborsilikatglas bedeckt sind. Gleichwohl sind auch in diesem Ausführungsbeispiel sämtliche Elektroden, d.h. auch die Kathoden 3,4, unmittelbar mit einer 6 µm dicken Sperrschicht 61 aus Bi-B-Si-O bedeckt. Die dielektrische Behinderungsschicht 62' ist also oberhalb der Sperrschicht 61 und zudem nur im Bereich der Anoden (5a, 5b) angeordnet. Während des "Einbrennens" der dielektrischen Behinderungsschicht 62' und auch später während des Lampenbetriebs schützt die Sperrschicht 61 die nicht mit der dielektrischen Behinderungsschicht 62' versehenen Kathoden vor dem Abdampfen. Unmittelbar auf der dielektrischen Behinderungsschicht 62' (Anoden) bzw. der Sperrschicht 61 (Kathoden und angrenzende Innenwandung zwischen den Elektroden) ist eine ca. 150 µm dicke Leuchtstoffgemischschicht 64 angeordnet. Diese relativ dicke Leuchtstoffgemischschicht 64 wirkt gleichzeitig als UV-Reflexionsschicht. Deshalb ist in dieser einfachen Variante auf eine separate Reflexionsschicht verzichtet. Auf der Innenwandung der Frontplatte 8 ist die Leuchtstoffgemischschicht 64 hingegen dünner, damit sie für das sichtbare Licht durchlässig ist.

Für reine UV-Strahler entfällt die Leuchtstoffschicht auf der Grund- und Frontplatte. Aus Effizienzgründen wird man allerdings in diesem Fall auf eine oder mehrere UV-reflektiernde Schichten auf der Grundplatte nicht verzichten.

Im Rahmen der Erfindung sind noch weitere zusätzliche Schichten und Schichtanordnungen denkbar, ohne daß die vorteilhafte Wirkung der Erfindung verloren ginge. Wesentlich ist hier nur, daß die Sperrschicht, welche ein Diffundieren der Metallionen der Elektroden in die oberen Schichten und insbesondere in die für die dielektrisch behinderte Entladung kritische dielektrische Behinderungsschicht verhindert, unmittelbar auf den Elektroden angeordnet ist.

An dieser Stelle sei nochmals darauf hingewiesen, daß die in den Figuren 1c und 2 stark schematisch dargestellten Schichten nicht notwendigerweise über die gesamte Fläche der Grundplatte ausgedehnt sein müssen. Wesentlich ist nur, daß zumindest die jeweils betreffende oder gegebenenfalls jede Elektrode vollständig mit den entsprechenden Schichten bedeckt ist.

Ferner müssen die einzelnen Schichten nicht notwendiger Weise völlig plan sein, wie dies in den Figuren 1c und 2 vereinfachend dargestellt ist. Vielmehr können die einzelnen Schichten, insbesondere die sehr dünnen Schichten, in der Praxis auch in sich selbst uneben sein. Dies tritt besonders dann zu Tage, wenn eine oder mehrere Schichten dünner als die Elektroden sind und die Schicht(en) folglich die Oberflächenform der Grundplatte mit den Elektroden noch erkennbar abbilden.

In einem weiteren Ausführungsbeispiel (nicht dargestellt) handelt es sich um eine rohrförmige Aperturlampe. Abgesehen von der unterschiedlichen Form des Entladungsgefäßes besteht der Hauptunterschied gegenüber der Flachlampe aus Figur 1 im auf die geänderte Gefäßform abgestimmten Herstellverfahren. Insbesondere kann der Leuchtstoff hier nicht mehr drucktechnisch sondern beispielsweise mittels Beschlämmen auf die Innenwandung bzw. die zuvor darauf angeordneten weiteren funktionellen Schichten aufgebracht werden. Die prinzipielle Reihenfolge sowie Funktion der einzelnen funktionellen Schichten, insbesondere die erfindungsgemäße Wirkung der Sperrschicht, welche die Diffusion der Metallionen der Elektroden in die dielektrische Behinderungsschicht beschränkt, entsprechen derjenigen aus Figur 1.

## Patentansprüche

1. Entladungslampe (1), geeignet für den Betrieb mittels dielektrisch behinderter Entladung, mit
• einem Entladungsgefäß (2),
• metallischen Elektroden (3-6), wobei zumindest ein Teil der Elektroden (3-6) auf der Innenwandung des Entladungsgefäßes (2) angeordnet ist,
• mindestens einer dielektrischen Schicht (62; 62'), die zumindest einen Teil der Innenwandungselektroden (3-6) und optional zusätzlich der korrespondierenden Innenwandung des Entladungsgefäßes (2) bedeckt und für die betreffenden Innenwandungselektroden (3-6) als dielektrische Behinderung wirkt,
**dadurch gekennzeichnet, daß**
zumindest derjenige Teil der Innenwandungselektroden (3-6; 5a, 5b), der mit einer dielektrischen Behinderungsschicht (62; 62') bedeckt ist, zusätzlich unmittelbar mit einer dielektrischen Sperrschicht (61) bedeckt ist, d.h. daß die Sperrschicht (61) jeweils zwischen den betreffenden Innenwandungselektroden (3-6-; 5a, 5b) und der dielektrischen Behinderungsschicht (62; 62') angeordnet ist.

2. Entladungslampe nach Anspruch 1, wobei die Sperrschicht (61) aus einem kristallisierten Glaslot (Sinterglaskeramik) oder teilkristallisierten Glaslot besteht.

3. Entladungslampe nach Anspruch 2, wobei die Sinterglaskeramik (61) aus Bi-B-Si-O besteht.

4. Entladungslampe nach Anspruch 2, wobei das teilkristallisierte Glaslot (61) aus Bi-Zn-B-Si-O oder Sn-Zn-P-O besteht.

5. Entladungslampe nach einem der vorstehenden Ansprüche, wobei die Dicke der Sperrschicht (61) in der Größenordnung von ca. 1 µm oder mehr liegt.

6. Entladungslampe nach Anspruch 5, wobei die Dicke der Sperrschicht (61) im Bereich zwischen 1 µm und 40 µm, bevorzugt im Bereich zwischen 1 µm und 30 µm, besonders bevorzugt im Bereich zwischen 5 µm und 20 µm liegt.

7. Entladungslampe nach Anspruch 5 oder 6, wobei die Dicke der Sperrschicht (61) kleiner als die Dicke der Behinderungsschicht (62; 62') ist.

8. Entladungslampe nach einem der vorstehenden Ansprüche, wobei die dielektrische Behinderungsschicht (62; 62') aus Pb-B-Si-O besteht.

9. Entladungslampe nach einem der vorstehenden Ansprüche, wobei die Dicke der dielektrischen Behinderungsschicht (62; 62') über den Elektroden ca. 50 µm oder mehr beträgt, insbesondere im Bereich zwischen 50 und 200 µm liegt.

## Claims

1. Discharge lamp (1), suitable for operating by means of a dielectrically impeded discharge, having
• a discharge vessel (2),
• metal electrodes (3-6), at least a portion of electrodes (3-6) being arranged on the inner wall of the discharge vessel (2),
• at least one dielectric layer (62; 62'), which covers at least a portion of the inner wall electrodes (3-6) and, optionally, additionally of the corresponding inner wall of the discharge vessel (2) and acts as a dielectric impediment for the relevant inner wall electrodes (3-6)
**characterized in that**
at least that portion of the inner wall electrodes (3-6; 5a, 5b) which is covered with dielectric impeding layers (62; 62') being additionally directly covered with a dielectric barrier layer (61), that is to say **in that** the barrier layer (61) is respectively arranged between the relevant inner wall electrodes (3-6; 5a, 5b) and the dielectric impeding layer (62; 62').

2. Discharge lamp according to Claim 1, the barrier layer (61) consisting of a crystallized glass solder (sintered glass ceramic) or partially crystallized glass solder.

3. Discharge lamp according to Claim 2, wherein the sintered glass ceramic (61) consists of Bi-B-Si-O.

4. Discharge lamp according to Claim 2, wherein the partially crystallized glass solder (61) consists of Bi-Zn-B-Si-O or Sn-Zn-P-O.

5. Discharge lamp according to one of the preceding claims, wherein the thickness of the barrier layer (61) is of the order of magnitude of approximately 1 µm or more.

6. Discharge lamp according to Claim 5, wherein the thickness of the barrier layer (61) is in the range of between 1 µm and 40 µm, preferably in the range of between 1 µm and 30 µm, particularly preferably in the range of between 5 µm and 20 µm.

7. Discharge lamp according to Claim 5 or 6, wherein the thickness of the barrier layer (61) is smaller than the thickness of the impeding layer (62; 62').

8. Discharge lamp according to one of the preceding claims, wherein the dielectric impeding layer (62; 62') consists of Pb-B-Si-O.

9. Discharge lamp according to one of the preceding claims, wherein the thickness of the dielectric impeding layer (62; 62') over the electrodes is approximately 50 µm or more, particularly in the range of between 50 and 200 µm.

## Revendications

1. Lampe (1) à décharge appropriée au fonctionnement au moyen d'une décharge rendue incomplète par voie diélectrique comprenant
• une enceinte (2) de décharge,
• des électrodes (3 à 6) métalliques, au moins une partie des électrodes (3 à 6) étant placée sur la paroi intérieure de l'enceinte (2) de décharge,
• au moins une couche (62 ; 62') diélectrique qui revêt au moins une partie des électrodes (3 à 6) de la paroi intérieure et, le cas échéant, en outre, de la paroi intérieure correspondante de l'enceinte (2) de décharge et qui agit pour les électrodes (3 à 6) de la paroi intérieure concernées en rendant la décharge incomplète par voie diélectrique,
**caractérisée en ce que**
au moins la partie des électrodes (3 à 6 ; 5a, 5b) de la paroi intérieure qui est revêtue d'une couche (62 ; 62') rendant la décharge incomplète par voie diélectrique est revêtue, en outre, directement d'une couche (61) diélectrique d'arrêt, c'est-à-dire que la couche (61) d'arrêt est disposée, respectivement, entre les électrodes (3 à 6 ; 5a, 5b) concernées de la paroi intérieure et la couche (62 ; 62') rendant incomplète la décharge par voie diélectrique.

2. Lampe à décharge suivant la revendication 1, dans laquelle la couche (61) d'arrêt est en une brasure pour du verre cristallisé (céramique en verre fritté) ou en brasure pour du verre cristallisé partiellement.

3. Lampe à décharge suivant la revendication 2, dans laquelle la céramique (61) en verre fritté est en Bi-B-Si-O.

4. Lampe à décharge suivant la revendication 2, dans laquelle la brasure (61) pour du verre cristallisé partiellement est en Bi-Zn-B-Si-O ou en Sn-Zn-P-O.

5. Lampe à décharge suivant l'une des revendications précédentes, dans laquelle l'épaisseur de la couche (61) d'arrêt est de l'ordre de grandeur d'environ 1 µm ou plus.

6. Lampe à décharge suivant la revendication 5, dans laquelle l'épaisseur de la couche (61) d'arrêt est comprise entre 1 µm et 40 µm, de préférence entre 1 µm et 30 µm, et d'une manière particulièrement préférée entre 5 µm et 20 µm.

7. Lampe à décharge suivant la revendication 5 ou 6, dans laquelle l'épaisseur de la couche (61) d'arrêt est inférieure à l'épaisseur de la couche (62 ; 62') rendant la décharge incomplète.

8. Lampe à décharge suivant l'une des revendications précédentes, dans laquelle la couche (62 ; 62') diélectrique rendant la décharge incomplète est en Pb-B-Si-O.

9. Lampe à décharge suivant l'une des revendications précédentes, dans laquelle l'épaisseur de la couche (62 ; 62') diélectrique rendant la décharge incomplète sur les électrodes est d'environ 50 µm ou supérieure à 50 µm et est notamment comprise entre 50 µm et 200 µm.
